# EUROPEAN PATENT APPLICATION

(11) **EP 1 804 540 A1**
(43) Date of publication of application: **04.07.2007**
(21) Application number: 05301122.7
(22) Date of filing: 29.12.2005
(51) Int. Cl.: H04Q 7/38

(54) **method and apparatus for synchronizing adjacent communication cells**

(71) Applicant: MOTOROLA, INC., Schaumburg, IL 60196 (US)
(72) Inventor: Bouvet, Cyril, 31170 Toulouse (FR); Favre, Guillaume, 31300 Toulouse (FR); Ratiney, Marc, 31270 Frouzins (FR)
(74) Representative: Joly, Jean-Jacques

(57) **Abstract**

A method for maintaining adjacent cell coordination between one or more adjacent cells and a wireless mobile communication device in a communication system, wherein non-programmed radio windows of a data frame are made available to receive control channel coordination bursts used in the initial or ongoing synchronization of the adjacent cell. In at least one embodiment, one or more programmed radio window of the data frame are reorganized, such as the placement of an adjacent channel power measurement burst between a downlink traffic burst and an uplink traffic burst, so as to increase the portion of the data frame, which is available for receiving control channel coordination bursts. In at least further embodiments, where there is no data to communicate as part of an uplink traffic burst, such as during a discontinuous data channel transmission, the portion of the data frame previously assigned to the uplink traffic burst is reclassified as a non-programmed radio window during which a control channel coordination burst can be received.

## Description

### FIELD OF THE INVENTION

The present invention generally relates to communication systems, and more particularly relates to a system and a method for maintaining adjacent cell coordination in a communication system including synchronization with the same.

### BACKGROUND OF THE INVENTION

In a cellular wireless communication network, mobile stations, such as wireless communication devices, communicate by transmitting and receiving wireless signals between the mobile station and one or more base stations. The base stations are generally spread throughout an area of coverage which is often divided into one or more smaller areas or cells. In a serving cell, traffic bursts are transmitted and received over a traffic channel. As a mobile station moves relative to the currently selected base station, the quality or signal level of the serving cell will fluctuate. At some point the quality or signal level will sufficiently deteriorate (i.e. fall below a level sufficient to support continued communication) so as to warrant a handover of the control of the communication to an adjacent cell. To facilitate this handover, a mobile station (e.g., a portable or mobile wireless communication device) will maintain synchronization with one or more adjacent cells. A list of adjacent cells is typically provided by the communication network to the mobile station.

To maintain synchronization with a particular adjacent cell, the mobile station generally decodes a synchronization burst of the adjacent cell on a periodic basis. Currently, the synchronization burst is decoded during idle periods of communication. For example, in a time division multiple access (TDMA) based communication system, an idle frame may occur once every twenty-six (26) traffic channel frames when operating in a dedicated mode. For a single cell, the synchronization burst may be decoded when an idle frame matches the occurrence of the synchronization burst from the adjacent cell, which in some instances will occur once every ten (10) idle frames.

In addition to keeping current the synchronization with previously identified adjacent cells, a new cell may appear on the list of adjacent cells provided by the communication network. If a new cell appears on the list of adjacent cells, the mobile station will try to synchronizes with the new cell, preferably as soon as possible, but only after higher priority activities have been supported. To synchronize the new cell, the mobile station decodes a frequency correction burst associated with the new cell and then decodes the corresponding synchronization burst. Because the frequency correction burst position may not be known by the mobile station, several consecutive idle frames (e.g., up to about eleven (11) consecutive idle frames) may occur prior to the occurrence of an idle frame, which coincides with the frequency correction bursts, such that the same can be detected.

Adjacent cell schedulers based on complex algorithms have been implemented in the past in at least some mobile phones to optimize the use of the idle frames and to maintain the synchronization of a maximum member of adjacent cells. However, the maintenance of synchronization for a cell with which an initial synchronization has already been established is often given priority over the initial synchronization with a newly identified adjacent cell. Consequently, the synchronization with respect to some or all of the new cells can sometimes be meaningfully delayed. Cell synchronization may further be impacted by the slower rate associated with synchronizing newly identified adjacent cells, especially those cells which have been identified during a call, as fewer idle frames are available for the use in the corresponding synchronization. In other words, the idle frames which might be available for synchronizing new cells are also used to maintain synchronization of other adjacent cells. This demand for idle frames is further compounded in dual and/or multi-mode mobile stations, such as those that additionally support and correspondingly attempt to perform third generation (3G) neighbor scanning during idle frames.

Accordingly, a method, which more optimally manages the use of available resources for maintaining synchronization of a mobile subscriber relative to one or more adjacent cells within a communication system that minimizes the usage and demand of idle frames is desirable. A method which enhances the availability of resources for synchronizing with newly identified adjacent cells in a communication system, relative to a mobile subscriber, is also desirable. Other desirable features and characteristics of the present invention will become apparent from the subsequent detailed description of the invention and the appended claims, taken in conjunction with the accompanying drawings and this background of the invention.

### BRIEF DESCRIPTION OF THE DRAWINGS

The present invention will hereinafter be described in conjunction with the following drawing figures, wherein like numerals denote like elements, and

FIG. 1 is a schematic diagram of an exemplary embodiment of a cellular communication system in accordance with the present invention;

FIG. 2 is a block diagram of an exemplary embodiment of the mobile station shown in FIG. I;

FIG. 3 illustrates an exemplary embodiment of adjacent cell coordination and timeslot allocation in accordance with at least one aspect of the present invention,

FIG. 4 illustrates an exemplary embodiment of adjacent cell coordination in accordance with at least a further aspect of the present invention, where the wireless communication is occurring as part of a discontinuous transmission mode;

FIG. 5 is a flow diagram of an exemplary embodiment of a method for maintaining adjacent cell coordination in accordance with at least one aspect of the present invention; and

FIG. 6 is a flow diagram of a method for maintaining synchronization of one or more new adjacent cells in a communication system in accordance with at least a further aspect of the present invention.

### DETAILED DESCRIPTION

The following detailed description of the invention is merely exemplary in nature and is not intended to limit the invention or the application and uses of the invention. Furthermore, there is no intention to be bound by any theory presented in the preceding background of the invention or the following detailed description.

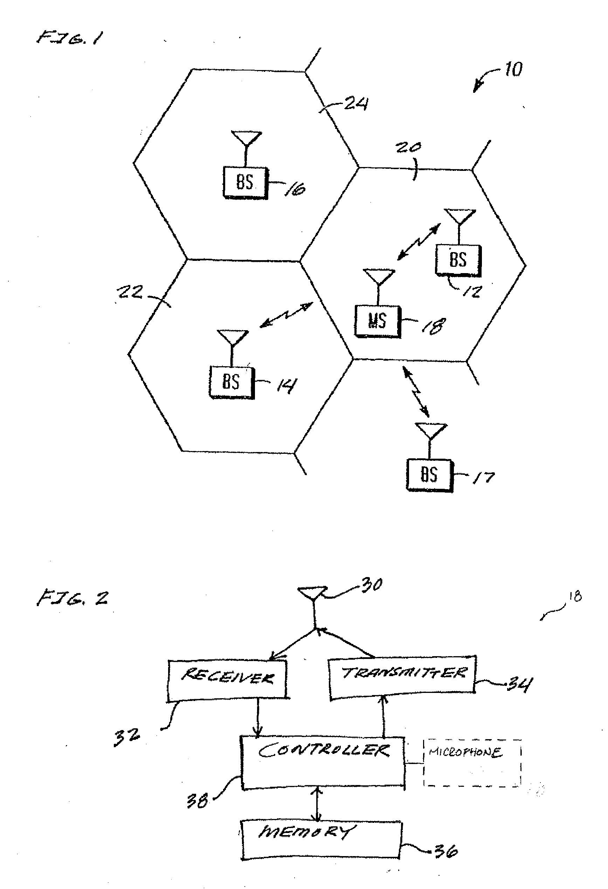

Referring to the drawings, FIG. 1 is a schematic diagram of an exemplary embodiment of portions of a wireless communication system 10 within which one or more wireless communication systems are intended to operate. The communication system 10 comprises one or more base stations (BS) 12, 14, 16, 17 and one or more mobile stations (MS) 18 configured to wirelessly communicate with base stations 12, 14, 16, 17. A plurality of cells 20, 22, 24 are represented as hexagons which are only rough approximations of the area of transmission for each of the cells 20, 22, 24. Each cell is typically served by one or more base stations 12, 14, 16, 17. The communication system 10 may support additional or other communication networks such as for dual radio access and the like. In such instances, coverage for a second network may geographically overlap with the coverage for the first network. However, the cell boundaries for each of the networks may or may not coincide. The communication networks may operate according to a variety of known wireless communication system specification protocols, such as Global Systems for Mobile communication (GSM), code division multiple access (CDMA), wideband code division multiple access (WCDMA), General Packet Radio System (GPRS), Enhance Data for Global Evolution (EDGE), and the like. The mobile station 18 may be a cellular radiotelephone, a personal digital assistant, a modem, an accessory, and the like, which is adapted to communicate wirelessly with the network infrastructure. Additionally, the mobile station 18 may support single mode or multimode operation, such as communication over 3G networks (e.g., wideband code division multiple access (WCDMA)) and second generation (2G) networks (e.g., GSM communication networks), and thus may be capable of operating in one or more than one communication protocol and/or one or more than one frequency band. For simplicity of discussion, system communication is described hereinafter with respect to a single mobile station 18, but is equally applicable to instances in which multiple mobile stations are operating together and/or are operating at substantially the same time within system 10.

Control of mobile station communication may be transferred based upon the quality and relative strength of the signal received from a serving base station and the base stations of each of the adjacent cells. For example, as the mobile station 18 moves away from a serving base station 12, the signal will generally become weaker. As the mobile station 18 moves toward serving base station 12, the signal typically becomes stronger. As mobile station 18 continues to move away from a serving base station 12 and towards one or more base stations, such as base station 14 of an adjacent cell 22, at some point the integrity of the communication supported through the adjacent cell will be better then the communication supported through the serving cell, and control of the communication will be transferred to base station 14 of adjacent cell 22.

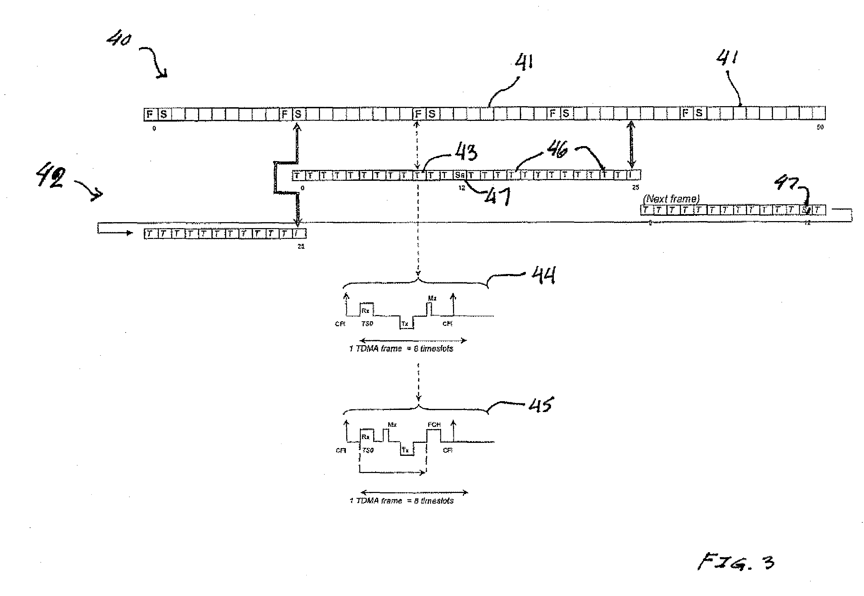

FIG. 2 is a block diagram of an exemplary embodiment of the mobile station 18 shown in FIG. 1. In the illustrated embodiment, the mobile station 18 comprises an antenna 30, a receiver 32 coupled to antenna 30, a transmitter 34 coupled to antenna. 30, a memory 36 for potentially storing a list of adjacent cells and a list of synchronization states (i.e. the synchronization status) of each of the adjacent cells, and a controller 38 coupled to memory 36, transmitter 34, and receiver 32. Receiver 32 and transmitter 34 function to support the mobile station 18 effecting a wireless communication link with the various base stations, such as base station 12 of cell 20, base station 14 of cell 22, and base station 16 of cell 24. For example, receiver 32 receives traffic bursts in a serving cell 20 of the mobile station 18, and transmitter 34 transmits traffic bursts in serving cell 20 of the mobile station 18, via antenna 30. The controller 38 supports the maintenance of coordination of the mobile station relative to one or more of the adjacent cells 22, 24 including maintaining synchronization with adjacent cells 22, 24 and synchronizing with newly identified adjacent cells appearing on the list of adjacent cells. The list of adjacent cells is typically provided by the communication network (e.g., via the corresponding base station 12, 14, 16, 17) of the currently serving cell to mobile station 18. In this exemplary embodiment, controller 38 maintains coordination with adjacent cells by detecting and decoding control channel coordination bursts, such as synchronization bursts and frequency correction bursts. In connection with at least one embodiment of the present invention, the control channel coordination bursts can be detected, for purposes of decoding, during non-programmed radio windows of a data frame as well as during an idle frame.

As mobile station 18 moves through cellular communication system 10, handover or hand-off occurs according to traditional operating techniques. The mobile station 18 8 acquires and maintains knowledge of the signal strength of serving and adjacent cells, synchronization information, and the like. For purposes of acquiring and maintaining coordination with each of the adjacent cells, controller 38 may direct receiver 32 to detect synchronization bursts and frequency correction bursts. As noted previously, in at least some aspects of the present invention, when synchronization bursts or frequency correction bursts occur, receiver 32 can detect for subsequent decoding the bursts when they coincide with non-programmed radio windows in the data frames of the traffic channel of the serving cell, in addition to when they occur in an idle frame.

FIG. 3 illustrates an exemplary embodiment of adjacent cell coordination and timeslot allocation in accordance with the present invention. In this exemplary embodiment, adjacent cell coordination is detailed with respect to GSM for simplicity of discussion although one skilled in the art will readily appreciate that the adjacent cell coordination may be readily applied to other communication protocols. A multiframe sequence 40 of an adjacent cell is mapped to a TDMA frame sequence 42 of full speech traffic for a serving cell. The multiframe sequence 40 of the adjacent cell illustrates frequency correction bursts (F) and synchronization bursts (S) that periodically occur in the frames 41 of the multiframe sequence 40. For example, each of the frequency correction bursts and synchronization bursts occur about once every 10 frames for GSM, and this periodicity and/or regularity may vary over time, and/or for other types of communication protocols. The frequency correction bursts (F) periodically occur in a frequency correction channel (FCH), and the synchronization bursts (S) periodically occur in a synchronization channel (SCH), generally in accordance with a predetermined frame sequence.

The TDMA. frame sequence 42 includes, but is not necessarily limited to, traffic bursts (T) occurring in traffic channel (TCH) frames 46, slow associated control bursts (Sa) that occur in a slow associated control channel (SACCH) frame 47, and idle frames (I). The TDMA frame sequence 42 wraps around from the end to the beginning of the multiframe sequence 40 of the adjacent cell to illustrate when an idle frame (I) can occur relative to the synchronization burst. In accordance with the present invention, when a control channel coordination burst, such as a frequency correction burst or a synchronization burst of an adjacent cell occurs during a TCH frame 43, and coincides with a non-programmed radio window portion of a TCH frame 43 of the TDMA frame sequence 42, the frequency correction burst or the synchronization burst can be potentially detected and received during the TCH frame 43. In the present exemplary embodiment, a frequency correction burst (F) is illustrated as occurring during a TCH frame 43.

A non-programmed radio window of a TCH frame represents the portion of the frame, during which a wireless communication device is not previously assigned to transmit or receive data in connection with another communication, likely with another channel. Generally, each transmitter and/or receiver, which are sometimes implemented together as a transceiver, can synchronize with and tune to a single channel, which at any given time is generally associate with a particular frequency. Different channels from the base stations of the same or different nearby cells (i.e. the serving cell and the one or more adjacent cells), will intentionally transmit on different at any given time to minimize interference between different channel transmissions.

Generally, at least some of the TCH frames 43, 46 have one or more programmed radio windows and one or more non-programmed radio windows. TCH frame 44 illustrates radio programming of a TCH frame during a typical transmission mode of the communication system 10. In the illustrated embodiment, each of TCH frames 43, 44, 46 has a first programmed radio window (Rx) for receiving traffic bursts, a second programmed radio window (Tx) for transmitting traffic bursts, and a third programmed radio window (Mx) for power measurements of an adjacent cell. In TCH frames 43, 44, 46, associated with at least some prior systems, the second programmed radio window (Tx) is typically programmed after the first programmed radio window (Rx), and the third programmed radio window (Mx) is typically programmed after the second programmed radio window (Tx). Historically, the time period between the various programmed radio windows (i.e. Rx, Tx, and Mx), was present to accommodate the time associated with tuning the radio circuitry to a different radio channel, such as the case where the received traffic bursts, and the transmitted traffic bursts are associated with different radio channels,

However, as radio interface technology has improved, many wireless communication devices are equipped with receiver and transmitter technology, which can accommodate faster transitions between different channels. For at least some mobile stations, this has allowed at least a portion of the frame format, during which wireless communication signals were neither transmitted nor received to be available for the transmission and/or the reception of wireless communication signals. In at least some embodiments, programmed radio window (Mx) for power measurements of an adjacent cell can be relocated to a new position within the frame format (i.e. between the programmed radio window (Rx) for receiving traffic bursts and the programmed radio window (Tx) for transmitting traffic bursts).

This in turn has allowed for an even larger non-programmed radio window to be present in the frame format after the programmed radio window (Tx) for transmitting traffic bursts. As a result, the present invention allows for the detection and reception of some control channel coordination bursts during some non-programmed radio windows including a non-programmed radio window, which has been redefined and/or expanded, as noted above. In some instances, determining whether a control channel coordination burst coincides with a non-programmed radio window will need to account for the time that might be necessary for tuning the radio interface circuitry to the channel, which is the source of the information. Correspondingly, to the extent that an adjacent cell control channel coordination burst may sufficiently coincide with a non-programmed radio window including any overhead associated with tuning to the corresponding channel, the adjacent cell control channel coordination burst may be received, thereby freeing up an idle slot, which would have otherwise have needed to have been used to receive the information.

After a control channel coordination burst of an adjacent cell, such as the frequency correction burst or the synchronization burst of the adjacent cell, has been identified as coinciding with a non-programmed radio window, the control channel coordination burst can be scheduled to be received during a non-programmed radio window in TCH frame 43. For example, an FCH window may be programmed during the non-programmed radio window for receiving the frequency control burst over the FCH channel, for purposes of adjusting to the appropriate frequency. Similarly, an SCH window may be programmed during an otherwise non-programmed radio window for receiving the synchronization burst. TCH frame 45 illustrates an exemplary embodiment, where a programmed radio window associated with a control channel coordination burst has been added to the TCH frame, during an otherwise non-programmed radio window, In TCH frame 45, as noted previously, the third programmed radio window (Mx) has been repositioned between the first programmed radio window (Rx) and the second programmed radio window (Tx). This repositioning creates a non-programmed radio window that extends from after the second programmed radio window (Tx) to the end of TCH frame 45, and a control channel coordination burst may be received during this time. In the illustrated embodiment, after the third programmed radio window (Mx) has been repositioned, an FCH window is programmed as part of the expanded otherwise non-programmed radio window of TCH frame 45 following the second programmed radio window (Tx). In this way, the FCH channel can be scanned during an FCH window made part of the TCH frame 45 of the serving cell, and the detected frequency correction burst can then be used to maintain coordination with the corresponding adjacent channel. After the frequency correction burst has been correctly decoded, a subsequently detected synchronization burst from the same adjacent cell can then be received during a subsequent TCH frame and/or idle frame, corresponding with the detection of the respective synchronization burst. The synchronization burst, can be received during an SCH window which is programmed within a TCH frame 45 following the second programmed radio window (Tx), to the extent that the two may coincide.

By relocating the programmed radio windows associated with measuring the power of an adjacent cell to a position which is between programmed transmitting and receiving traffic burst, about four (4) timeslots from a TCH frame having about eight (8) timeslots, may be available for use in receiving control channel coordination bursts for purposes of maintenance of adjacent cell coordination with adjacent cells, in at least one embodiment.

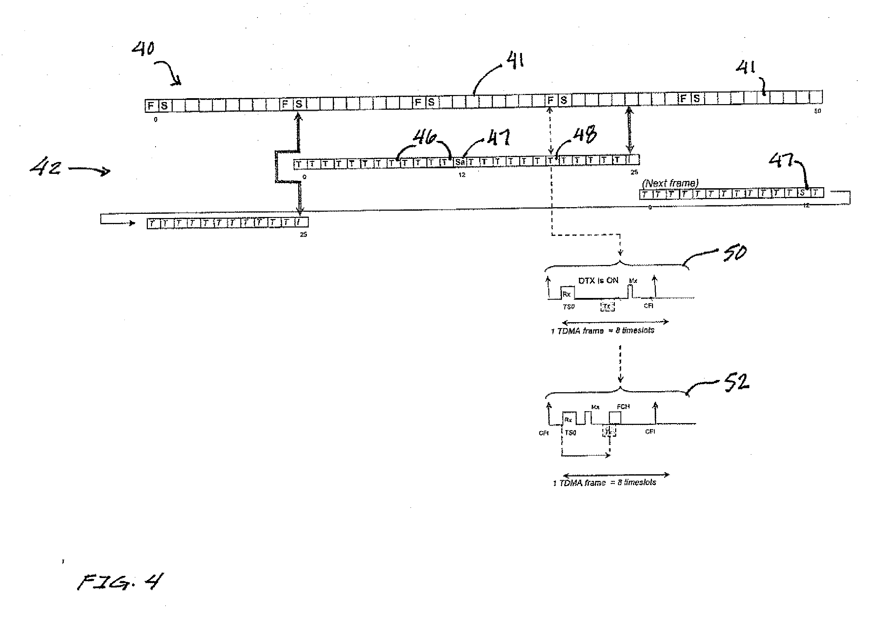

FIG. 4 illustrates a further embodiment of an exemplary frame format for use in the adjacent cell coordination in accordance with at least one aspect of the present invention. In the illustrated embodiment, a frequency correction burst (F) of the base station of an adjacent cell coincides with TCH frame 48 of the base station of the serving cell. In some instances, a discontinuous transmission (DTX) mode may be activated, which corresponds to instances where there is no need or desire for the mobile station to transmit data on the uplink channel, such as when a vocoder detects that a user is not speaking. In the discontinuous transmission (DTX) mode of the communication system 10, each of TCH frames 46, 48 has the first programmed radio window (Rx) for receiving traffic bursts on a downlink channel and the third programmed radio window (Mx) for power measurements on the adjacent cell, but the second programmed radio window (Tx) for transmitting traffic bursts on an uplink channel is cancelled. However similar to the embodiment illustrated in FIG. 3, the third programmed radio window (Mx) may still be relocated more immediately after the first programmed radio window (Rx), such that it would be positioned between the programmed radio window for receiving traffic bursts and the programmed radio window for transmitting traffic bursts, if the latter had not been cancelled. Similar to embodiment illustrated in FIG. 3, this allows for a larger non-programmed radio window which can be used to receive a control channel coordination burst. For example a detected frequency correction burst or synchronization burst from the adjacent cell can be received during a non-programmed radio window of the TCH frame (e.g., TCH frame 50 for the frequency correction burst) corresponding to the detected burst. Cancellation of the second programmed radio window (Tx) allows for a non-programmed radio window, which extends from the end of the third programmed radio window (Mx) to the beginning of the first programmed radio window (Rx) in a subsequent frame.

An example of a resulting frame format, after accommodating for a control channel coordination burst, which coincides with the otherwise non-programmed radio window is represented by TCH frame 52, wherein the synchronization burst could alternatively represent a similarly timed frequency correction burst. In the exemplary embodiment where discontinuous transmission mode has been enabled, for a TCH frame having about eight (8) timeslots, about 5.2 timeslots are available in the resulting non-programmed radio window for receiving one or more control channel coordination bursts in connection with coordination of the respective adjacent cells relative to the mobile station, after allowing for the cancelation of the the second programmed radio window (Tx) and the relocation of the third programming the third programmed radio window (Mx) for measuring adjacent channel power after the first programmed radio window (Rx).

FIG. 5 is a flow diagram of a method 100 for maintaining coordination of a mobile subscriber relative to one or more adjacent cells in a communication system in accordance with the present invention. In this exemplary embodiment, a determination is made as to when a control channel coordination burst, such as a synchronization (SCH) burst, of the adjacent cell is received relative to a non-programmed radio window of a data channel (e,g., TCH) of the serving cell at step 105. In accordance with the present invention, when applied to a GSM network application, the occurrence of a synchronization burst of the adjacent cell may be received for subsequent decoding when an SCH burst from the adjacent cell occurs during the non programmed radio window portion of the TCH frame of the serving cell. When the communication system 10 is not operating in a discontinuous transmission mode, the traffic channel typically includes a first programmed radio window for receiving a downlink traffic burst, a second programmed radio window for transmitting an uplink traffic burst, and a third programmed radio window for measuring a power of the adjacent cell. The control channel coordination burst (e.g., the SCH burst), which is received during a non-programmed radio window of the traffic channel frame (e.g., the TCH frame), is decoded at step 110. In one exemplary embodiment, the first programmed radio window is typically programmed prior to the second programmed radio window, and the second programmed radio window is programmed prior to the third programmed radio window.

In another exemplary embodiment, the third programmed radio window is repositioned within the frame format between the first programmed radio window and the second programmed radio window. This repositioning allows for a relatively larger non-programmed radio window to exist in the latter half of the frame format. In yet a further exemplary embodiment, the second programmed radio window is cancelled, and the third programmed radio window is repositioned within the frame format after and more closely adjacent to the first programmed radio window. This repositioning allows for frame format having a non-programmed radio window that extends from the end of the third programmed radio window to the end of the TCH frame. In one exemplary embodiment, an SCH burst, which is received during this non-programmed radio window can be decoded.

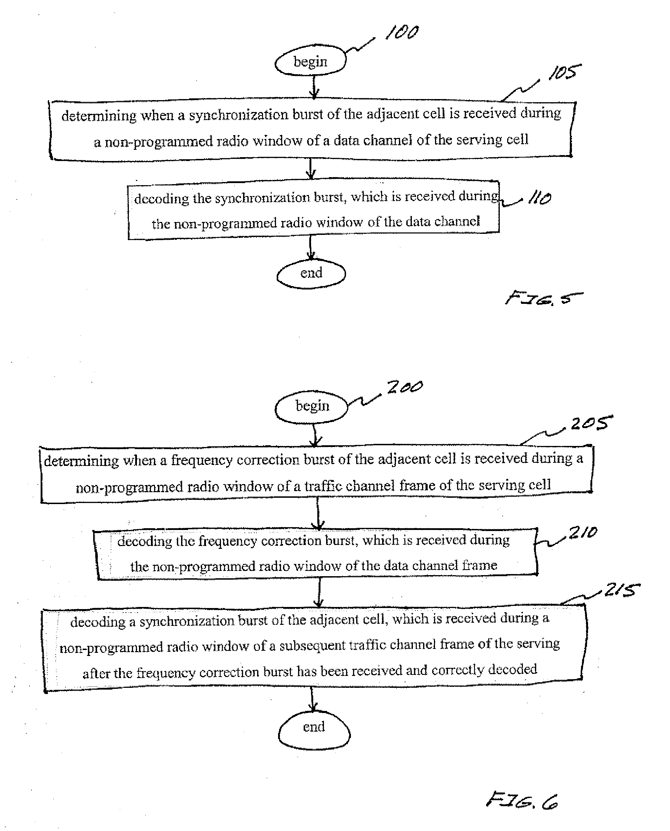

FIG. 6 is a flow diagram of a method 200 for maintaining synchronization within a communication system of one or more adjacent cells including newly identified adjacent cells relative to a mobile station, in accordance with the present invention. In this exemplary embodiment, prior to receiving and decoding an SCH burst for the purpose of maintaining synchronization with an adjacent cell, a determination is made as to when a frequency correction (FCH) burst of the adjacent cell is received during a non-programmed radio window of a data channel (e.g., TCH) of the serving cell at step 205. Once a suitable frequency correction has been established, relative to a particular adjacent cell, ongoing coordination of the adjacent cell can largely be managed through subsequent the receipt of subsequent synchronization bursts.

By decoding the synchronization burst or frequency correction burst of an adjacent cell during a non-programmed radio window of a traffic channel of the serving cell, idle frame availability for the synchronization of adjacent cells where control channel coordination bursts do not coincide with a non-programmed radio window of the frame format of the data frames is increased, which in turn will generally allow for improved adjacent cell synchronization performance. By adjusting cell synchronization performance, as provided by the present invention, and correspondingly described through the in association with the exemplary embodiment, the mobile station 18 can improve adjacent cell coordination without increasing the number of receivers, and any associated increases in circuit complexity, current drain, and costs that may be associated with introducing additional receivers and related circuitry. Additionally, more idle frames in the frame sequence may be available to perform operations of the mobile station 18, which support multi-mode operation, such as 3G neighbor scanning in the case of a dual mode mobile station, thereby improving multi-mode call performance,

While at least one exemplary embodiment has been presented in the foregoing detailed description, it should be appreciated that a number of variations exist, which could be incorporated without departing from the teachings of the present invention. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing the exemplary embodiment or exemplary embodiments, and practicing the various aspects of the present invention. It should be understood that changes can be made in the function and arrangement of elements without departing from the scope of the invention as set forth in the appended claims and the legal equivalents thereof.

## Claims

1. A method for maintaining adjacent cell coordination between one or more adjacent cells and a wireless mobile communication device in a communication system including one or more respective base stations, which support communication with each of the one or more adjacent cells and a serving cell, where at least the base station for the serving cell includes at least one data channels wherein data bursts are communicated in accordance with a frame format having one or more data frames, each data frame including one or more programmed radio windows and one or more non-programmed radio windows, and each of the respective base stations of the one or more adjacent cells includes at least one control channel, wherein control channel coordination bursts are regularly transmitted, the method comprising:
determining when a control channel coordination burst of one of the one or more adjacent cells is received during a non-programmed radio window of a data frame of the serving cell; and
decoding the control channel coordination burst, which is received during the non-programmed radio window of the data frame.

2. A method according to claim 1, wherein the data frame includes a first programmed radio window configured to receive a downlink traffic burst, a second programmed radio window configured to transmit an uplink traffic burst, and a third programmed radio window configured to measure a power of the adjacent cell; and
wherein the method further comprises positioning the third programmed radio window within the data frame between the first programmed radio window and the second programmed radio window prior to said step of determining.

3. A method according to claim 2, wherein the non-programmed radio window extends between an end of the second programmed radio window to an end of the frame.

4. A method according to claim 2, wherein when there is no data to transfer during the second programmed radio window, the second programmed radio window is cancelled, and the non-programmed radio window is reconfigured to extend between an end of the third programmed radio window to an end of the frame.

5. A method according to claim 4, wherein the second programmed radio window is cancelled, when an activation of a discontinuous transmission of the data channel has been detected.

6. A method according to claim 5, wherein a discontinuous transmission of the data channel is activated, when the wireless mobile communication device has no data to transmit to the communication system.

7. A method according to claim 6, wherein the data being communicated between the wireless mobile communication device and the communication system supports a two way voice communication, and wherein the wireless mobile communication device has no data to transmit, when no audio data is detected by a microphone of the wireless mobile communication device.

8. A method according to claim 1, wherein the control channel coordination burst comprises a synchronization channel burst, wherein the at least one data channel comprises one or more traffic channels, and wherein said step of determining comprises determining when the synchronization channel burst is received during a non-programmed radio window of the data frame of the serving cell.

9. A method according to claim 1, wherein the control channel coordination burst comprises a frequency correction channel burst, wherein the at least one data channel comprises one or more traffic channels, and wherein said step of determining comprises determining when the frequency correction channel burst is received during a non- ' programmed radio window of the data frame of the serving cell,

10. A method according to claim 7 further comprising:
determining when a subsequent control channel coordination burst including a synchronization channel burst of the adjacent cell for which a frequency correction channel burst was previously received is received during a subsequent non-prograznzned radio window of the data frame of the serving cell; and
decoding the synchronization channel burst, which is received during the subsequent non-programmed radio window of the data frame of the serving cell.

11. A method according to claim 1, wherein the frame format includes one or mere periodic idle frames, and wherein if the receipt of the control channel coordination burst does not coincide with a non-programmed radio window of a data frame, then the control channel coordination burst is decoded during the one or more periodic idle frames.

12. A method according to claim 1, wherein the steps of determining and decoding are repeated for more than one adjacent cell.

13. A wireless mobile communication device comprising:
an antenna;
a receiver coupled to said antenna, said receiver being configured to receive data bursts from a serving cell in accordance with a frame format having one or more data frames, each of said data frame comprising one or more programmed radio windows and one or more non-programmed radio windows, and configured to receive control channel coordination bursts from one or more adjacent cells;
a transmitter coupled to said antenna, said transmitter configured to transmit data bursts to said serving cell in accordance with said frame format during one or more of said programmed radio windows;
a memory configured to store a list of adjacent cells and a list of synchronization states of each of said adjacent cells; and
a processor coupled to said memory, said transmitter, and said receiver, said processor configured to maintain coordination with the one or more adjacent cells, wherein said processor at least partially maintains coordination via communications received from the adjacent cells during one or more non-programmed radio windows.

14. A wireless mobile communication device according to claim 13, wherein said receiver is further configured to receive one or more control channel coordination bursts associated with an adjacent cell during a non-programmed radio window.

15. A wireless mobile communication device according to claim 13, wherein said control channel coordination bursts include at least one of a frequency correction channel burst and a synchronization channel burst.

16. A wireless mobile communication device according to claim 13, wherein said one or more data frames includes a plurality of programmed radio windows corresponding to a downlink traffic burst, an uplink traffic burst and an adjacent cell power measurement burst, wherein the adjacent cell power measurement burst occurs between the downlink traffic burst and the uplink traffic burst.

17. A wireless mobile communication device according to claim 16, wherein a non-programmed radio window occurs from the end of the uplink traffic burst to the end of the data frame.

18. A wireless mobile communication device according to claim 16, wherein said processor is further configured to cancel the uplink traffic burst, when a discontinuous transmission mode has been detected as enabled, and including within the one or more non-programmed radio windows a portion of the data frame corresponding to the cancelled uplink traffic burst.

19. A wireless mobile communication device according to claim 16, further comprising a microphone for detecting audio data to be communicated as part of an uplink traffic burst during a two way voice communication.

20. A wireless mobile communication device according to claim 13, wherein the processor includes one or more prestored sets of instructions adapted for maintaining the coordination with the one or more adjacent cells.
